# EUROPEAN PATENT APPLICATION

(11) **EP 4 786 256 A1**
(43) Date of publication of application: **05.08.2026**
(21) Application number: 26151390.7
(22) Date of filing: 12.01.2026
(51) Int. Cl.: B60L 50/64, B60L 53/80, B60L 50/60, B60R 19/42, B66F 9/075, H01M 50/242, H01M 50/249, H01M 50/262, H01M 50/271

(54) **METHOD FOR REPLACING ON-VEHICLE BATTERY**

(30) Priority: 31.01.2025 JP 2025014887
(71) Applicant: Toyota Jidosha Kabushiki Kaisha, Toyota-shi, Aichi-ken 471-8571 (JP)
(72) Inventor: IDESHIO, Yukihiko, Toyota-shi, 471-8571 (JP); MATSUSHITA, Taro, Toyota-shi, 471-8571 (JP); KOSHIKAWA, Tomoaki, Toyota-shi, 471-8571 (JP)
(74) Representative: D Young & Co LLP

(57) **Abstract**

The present disclosure relates to a replacing method for replacing an on-vehicle battery mounted on a vehicle using a cart (20). The cart (20) includes a protrusion (25) that protrudes upward. The replacing method includes moving the cart (20) making the protrusion (25) come into contact with a guide portion (13) provided under a floor of the vehicle (10).

## Description

### BACKGROUND

### Field

The present disclosure relates to a method for replacing an on-vehicle battery mounted on a vehicle.

### Background Art

Patent Document 1 discloses a battery replacement system for replacing a battery (accumulator) mounted on a vehicle. According to the battery replacement system disclosed in Patent Document 1, a space is provided under the road surface on which the electric vehicle travels for a travel cart to travel, and the travel cart travels through the space under the road surface to replace the battery of the electric vehicle.

### Prior Art Documents

[Patent Document 1] JP 2011-168127 A

### SUMMARY

A method of replacing an on-vehicle battery mounted on a vehicle using a cart is known. When replacing the on-vehicle battery, it is necessary to move the cart and align the vehicle and the cart so that an attachment position of the on-vehicle battery of the vehicle and a position of the battery mounted on the cart match. One method of alignment is to provide a dedicated space for the cart to run under the road surface on which the electric vehicle drives, and to restrict the cart to run within a specific position within the space. However, providing such a dedicated space requires larger equipment and increasing costs.

The present disclosure relates to a replacing method for replacing an on-vehicle battery mounted on a vehicle using a cart. The cart includes a protrusion that protrudes upward. The replacing method includes moving the cart making the protrusion come into contact with a guide portion provided under a floor of the vehicle.

According to the technique of the present disclosure, while the cart is moved, the protrusion of the cart is made to come into contact with the guide portion of the vehicle. Thus, the cart can be aligned to move to the on-vehicle battery replacement position without providing a dedicated track for the cart on the road surface. This makes it possible to make the equipment smaller and reduce the cost of replacing the on-board battery.

### BRIEF DESCRIPTION OF THE DRAWINGS

FIG. 1 a vehicle according to an embodiment as seen from below.
FIG. 2 is a side view of the vehicle according to the embodiment.
FIG. 3 is a front view for explaining operation of the on-vehicle battery replacement apparatus according to the embodiment.
FIG. 4 is a side view for explaining operation of the on-vehicle battery replacement apparatus according to the embodiment.
FIG. 5 is a side view for explaining operation of the on-vehicle battery replacement apparatus according to the embodiment.
FIG. 6 is a diagram for explaining a modification.

### DETAILED DESCRIPTION

Embodiments of the present disclosure will be described with reference to the accompanying drawings.

### 1. Configuration of On-vehicle battery Replacement Apparatus

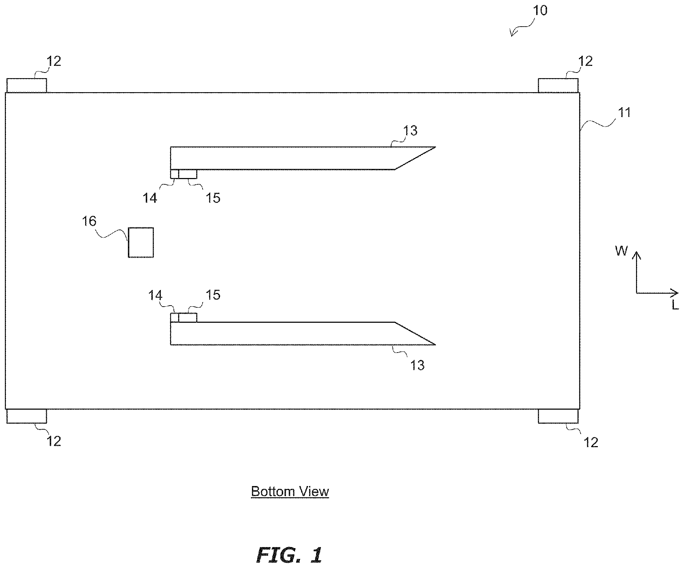

An on-vehicle battery replacement apparatus according to an embodiment is an apparatus for replacing an on-vehicle battery mounted on a vehicle. The on-vehicle battery replacement apparatus includes the on-vehicle battery with a protection panel and a cart equipped with a lift for lifting the on-vehicle battery. The on-vehicle battery replacement apparatus according to the embodiment will be described with reference to FIGS. 1 to 5.

FIG. 1 shows a vehicle floor 11 and wheels 12 of a vehicle 10 as seen from below. The horizontal direction in FIG. 1 corresponds to the front-to-rear direction (L direction) of the vehicle 10, and the vertical direction corresponds to the left-to-right direction (W direction) of the vehicle 10. The left direction in FIG. 1 corresponds to the front direction of the vehicle 10. A connector 16 is provided on the underside of the vehicle floor 11 for connecting to a connector of the on-vehicle battery.

In addition, a guide mechanism 13 for guiding the cart is provided on the underside of the vehicle floor 11. Hereinafter, an inside surface of the guide mechanism 13 as seen in the width direction of the vehicle 10 is referred to as a guide surface. The guide surface is used for aligning the cart in the width direction. The guide mechanism 13 is provided with two protruding structures, an L-direction stopper 14 and an H-direction stopper 15. The L-direction stopper 14 is used for aligning the cart in the longitudinal direction, and the H-direction stopper 15 is used for aligning in the height direction when raising the lift to attach or detach the on-vehicle battery.

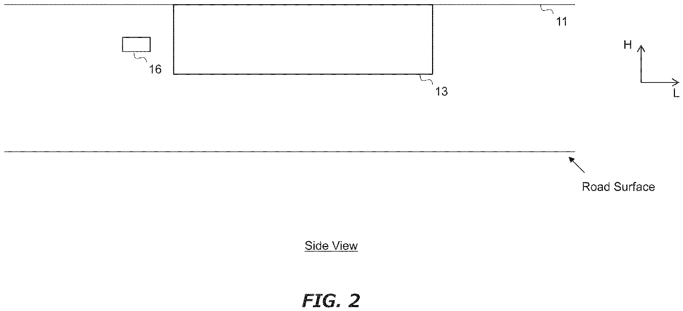

FIG. 2 is a side view of the vehicle floor 11 and the guide mechanism 13. The horizontal direction in FIG. 2 corresponds to the Longitudinal direction of the vehicle 10, and the vertical direction corresponds to the up-down direction (H direction) of the vehicle 10. The left direction in FIG. 2 corresponds to the front direction of the vehicle 10. The horizontal line below the guide mechanism 13 represents a road surface. Although not shown in the figure, the connector 16 is connected to the vehicle floor 11 by a cable or the like.

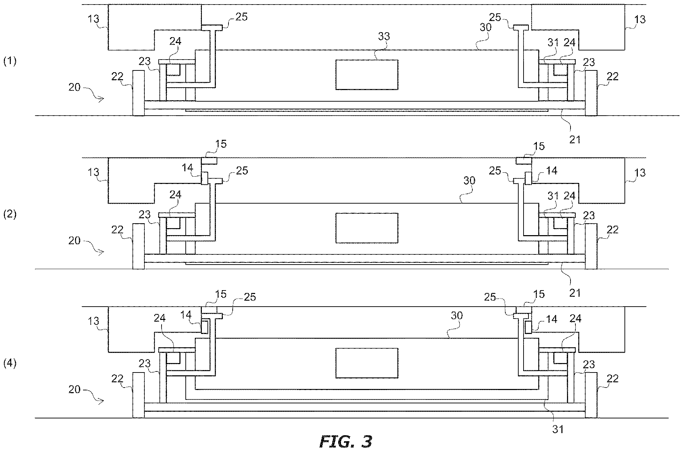

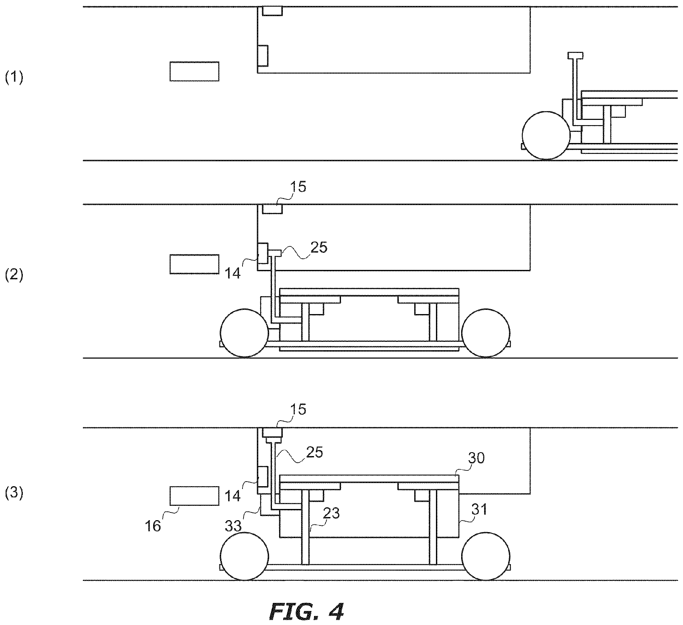

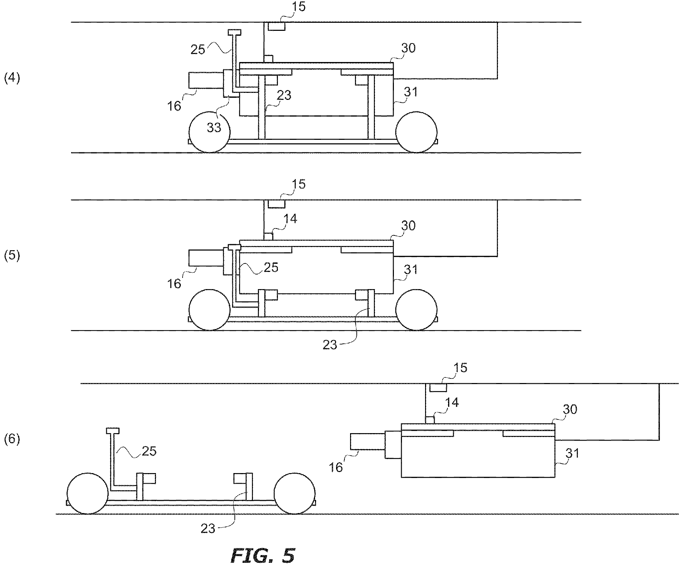

Generally, a vehicle mounting an on-vehicle battery is equipped with an shock absorption material called an EA (Energy Absorption) material under the floor of the vehicle body. The EA material is installed on both the left and right sides of the location where the on-vehicle battery is mounting, protecting the battery from impact when a side collision occurs. In the embodiment, the EA material is used as the guide mechanism 13. By using the EA material as the guide mechanism 13, it is possible to align the cart 20 by utilizing a part which is already mounted on the vehicle 10, without adding new parts. The movement of the cart 20 guided by the guide mechanism 13 is described with reference to FIGS. 3 to 5. Steps (1), (2), and (4) in FIG. 3 correspond to steps (1), (2), and (4) in FIGS. 4 and FIG. 5. In FIGS. 3 to 5, some reference numerals which are not used in the description are omitted.

FIG. 3 shows the vehicle 10 and the cart 20 as seen from front. The cart 20 is equipped with wheels 22 and can mount a battery pack 30 housed in a protection panel 31 on a frame 21 and carry it. The protection panel 31 is provided to protect the battery pack 30 mounted on the vehicle 10 from impacts from the underside, such as flying stones. Although not shown in the figure, the frame 21 has, for example, a plate shape with a hole inside, and the battery pack 30 can be held in the hole. Due to such shape of the frame 21 , the lowermost surface of the battery pack 30 (protection panel 31 ) is lower than the lowermost surface of the frame 21. This allows the height of the cart 20 to be kept low when the on-vehicle battery is mounted, and makes it possible to get the cart 20 under the floor of the vehicle 10 without providing a dedicated space under the road surface.

The cart 20 is also equipped with a lift mechanism (lift) 23 for raising and lowering the battery pack 30 when replacing the on-vehicle battery. An attachment/detachment mechanism 24 for attaching and detaching the on-vehicle battery is provided on the upper portion of the lift mechanism 23. A portion of the protection panel 31 has a convex shape as seen from above, and the convex shape acts as a hold unit for holding the battery pack 30 attached to the vehicle. While the on-vehicle battery is mounted on the cart 20, the attachment/detachment mechanism 24 supports the hold unit, thereby allowing the protection panel 31 and the battery pack 30 to be held on the cart 20. A connector 33 of the on-vehicle battery is provided on the front side surface of the battery pack 30, and the connectors can be fitted to each other by inserting a connector 16 of the vehicle from the front.

The cart 20 is also equipped with a guide mechanism 25. The guide mechanism 25 is a rod-shaped protrusion that extends upward of the cart 20. For example, a roller is provided to a top of the guide mechanism 25 so that the roller can contact with the guide surface of the guide mechanism 13. When replacing the on-vehicle battery, the cart 20 moves under the floor of the vehicle 10 with the roller of the guide mechanism 25 in contact with the guide surface of the guide mechanism 13, so that the cart 20 moves according to the guide mechanism 13 and is guided to a position where the on-vehicle battery can be attached or detached. In this way, the cart 20 can be aligned in the left-to-right direction.

FIG. 3 shows a flow of steps when the on-vehicle battery is detached. First, in step (1), the cart 20 enters under the floor of the vehicle 10 from the rear. As shown in FIG. 1, the guide surface of the guide mechanism 13 expands in a width direction toward the rear of the vehicle, which is the side through which the cart 20 enters. Such a shape of the guide surface makes it possible to widen the range in which the cart 20 can get under the floor, and makes it easier to regulate the position of the cart 20 even if the position of the cart 20 is shifted laterally when it gets under the floor through the rear side. The guide mechanism 25 moves along the guide surface of the guide mechanism 13, and the cart 20 is guided to the battery replacement position while traveling and is aligned in the left-to-right direction.

In step (2), the cart 20 is aligned in the front-to-rear direction. Specifically, the guide mechanism 25 comes into contact with the L-direction stopper 14 and the cart 20 is stopped, and therefore the cart 20 stops at the position where the on-vehicle battery starts being raised. The position where the on-vehicle battery starts being raised is located before the position where the connectors of the on-vehicle battery and the vehicle 10 are fitted together, as seen in the longitudinal direction of the vehicle 10. The L-direction stopper 14 is provided at a position where it can stop the cart 20 at the position where the battery starts being raised. As shown in the figure, the L-direction stopper 14 is arranged outside the rod-shaped portion extending upward of the guide mechanism 25, and has a size and a position that comes into contact only with an end portion of the guide mechanism 25, so as not to hinder the movement of the cart 20 more than necessary.

FIG. 4 shows a side view of the vehicle 10 and the cart 20. In step (3), the battery pack 30 to which the protection panel 31 is joined is raised by the lift mechanism 23. Since the guide mechanism 25 is attached to the lift mechanism 23, it rises together with the lift mechanism 23. Then, as the guide mechanism 25 comes int contact with the H-direction stopper 15 and is stopped, the lift mechanism 23 stops rising. In this way, alignment in the height direction is achieved. The H-direction stopper 15 is provided at a position where it can stop the lift mechanism 23 at a height where the connector 33 of the battery pack 30 and the connector 16 of the vehicle are fitted together.

In step (4), the cart 20 moves forward. As the cart 20 moves forward, the connector 16 of the vehicle is inserted into the connector 33 of the on-vehicle battery. Furthermore, the protection panel 31 is fixed to the vehicle 10 by the attachment/detachment mechanism 24 while the battery pack 30 is supported by the protection panel 31. Although not shown in the figure, a fix unit for fixing the hold unit of the protection panel 31 is provided under the floor of the vehicle 10, and by fixing the hold unit to the fix unit at a position where the connectors are fitted together, it is possible to support the protection panel 31 and the battery pack 30. As the mechanism for fixing the protection panel 31 to the vehicle 10, arbitrary mechanism can be used. For example, a mechanism called a wedge plank mechanism, a push latch mechanism, a knock mechanism, a ball catch mechanism, or a free slide lock mechanism may be used, or the protection panel 31 may be fixed by a magnet.

Furthermore, since the guide mechanism 25 is attached to the lift mechanism 23, when the battery pack 30 is lifted by the lift mechanism 23, the guide mechanism 25 also rises, and the end portion of the guide mechanism 25 moves to a position higher than the L-direction stopper 14. Therefore, the cart 20 can move forward without being hindered by the L-direction stopper 14.

When the battery pack 30 has been fixed to the vehicle 10, the lift mechanism 23 is lowered to its initial position in step (5). At this time, since the cart 20 is ahead of the position where it has stopped in step (3), the guide mechanism 25 has already passed the position where the L-direction stopper 14 is located as seen in the front-to-rear direction. Therefore, after the on-vehicle battery is attached, the cart 20 can move forward without being hindered by the L-direction stopper 14. In step (6), the cart 20 moves further forward and passes under the floor of the vehicle 10. In this way, the on-vehicle battery is attached. When the on-vehicle battery is detached from the vehicle 10, the above procedure is reversed.

The on-vehicle battery replacement apparatus described above makes it possible to align the vehicle and the cart in the width direction, longitudinal direction, and height direction without providing dedicated equipment. This allows the equipment to be made smaller and costs to be reduced. Furthermore, since the shock absorption member for the on-vehicle battery that is originally installed on the vehicle is used as the alignment member, the cost of installing extra members can be reduced.

### 2. Modification

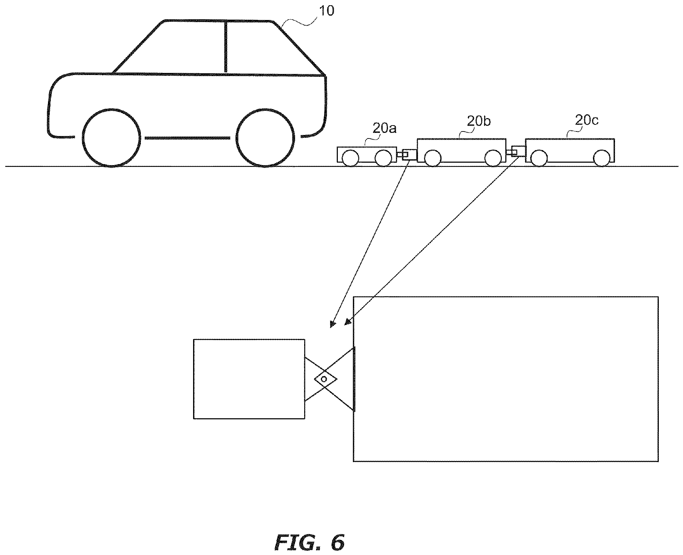

FIG. 6 shows the on-vehicle battery replacement apparatus in a modification. In the modification, the cart 20 includes three carts 20a, 20b, and 20c. The cart 20a is provided with a drive device and drives the carts 20a to 20c. The carts 20b and 20c are moved by being pulled by the cart 20a. The cart 20b is equipped with an on-vehicle battery detachment device, and detaches the on-vehicle battery. The cart 20c is equipped with an on-vehicle battery attachment device, and attaches the battery on the vehicle 10 after the battery has been detached by the cart 20b. In this way, the cart 20 may include multiple carts, and functions such as driving the cart, detaching the battery, and attaching the battery may be separated among the multiple carts.

In portions where the multiple carts are connected, mechanisms that do not restrict the lateral movement of the carts are used. For example, as shown in a lower part of FIG. 6, the carts are connected to each other so as to be rotatable laterally around a connecting axis. By allowing the carts to move freely in the left-to-right direction, alignment can be performed flexibly.

In this way, by distributing the functions required for replacing the on-vehicle battery among multiple carts, the number of functions that are provided on each cart can be reduced, thereby increasing the flexibility of the apparatus configuration. Furthermore, since each cart can be made smaller, the width of the entire connected carts can also be made smaller, thereby improving maneuverability when getting under the floor of the vehicle 10. Furthermore, for example, a general AMR (Automatic Guided Vehicle) can be used as the driving cart 20a, which allows the costs to be reduced. Furthermore, the weight of each cart is reduced, increasing drivability and making alignment easier.

In addition, the cart 20b used to detach the battery and the cart 20c used to attach the battery may be equipped with a device which has a common function of raising and lowering the on-vehicle battery and attaching and detaching it to and from the vehicle 10. By making the function common between the cats, costs can be reduced.

## Claims

1. A replacing method for replacing an on-vehicle battery mounted on a vehicle (10) using a cart (20), wherein
the cart (20) comprises a protrusion (25) that protrudes upward, and
the replacing method comprises:
moving the cart (20) making the protrusion (25) come into contact with a guide portion (13) provided under a floor of the vehicle (10).

2. The replacing method according to claim 1, wherein
the guide portion (25) is made up of a shock absorption member provided on left and right sides of a mounting position of the on-vehicle battery.

3. The replacing method according to claim 2, further comprising making the protrusion (25) come into contact with a guide surface that is an inside surface of the guide portion (13) as seen in a left-to-right direction, wherein
the guide surface expands laterally toward the rear of the vehicle (10).

4. The replacing method according to any one of claims 1 to 3, wherein
the cart (20) is equipped with a lift (23) for lifting the on-vehicle battery,
the guide portion (13) comprises a front-to-rear direction stopper (14) and a height direction stopper (15), and
the replacement method further comprises:
aligning the cart (20) in a front-to-rear direction by making the protrusion (25) come into contact with the front-rear direction stopper (14); and
aligning the lift (23) in a height direction by making the protrusion (25) come into contact with the height direction stopper (15).

5. The replacing method according to any one of claims 1 to 3, wherein
the cart (20) includes a first cart (20-a) equipped with a drive device and a second cart (20-b, 20-c) equipped with a lift for lifting the on-vehicle battery and different from the first cart (20-a).
